# EUROPEAN PATENT SPECIFICATION

(11) **EP 1 256 274 B1**
(45) Date of publication and mention of the grant of the patent: **26.07.2006**
(21) Application number: 02010100.2
(22) Date of filing: 07.05.2002
(51) Int. Cl.: A01K 89/027

(54) **Spinning reel having instant switching apparatus for spool braking force**
Angelrolle mit sofortiger Schalteinrichtung der Bremskraft eines Spüles
Moulinet de pêche comportant un appareil de commutation instantané pour la force de freinage d'une bobine

(30) Priority: 09.05.2001 KR 2001025313
(43) Date of publication of application: 13.11.2002
(73) Proprietor: BANAX CO., LTD., Incheon (KR)
(72) Inventor: Kang, Jin-Soon, Incheon (KR)
(74) Representative: Weitzel, Wolfgang

(56) References cited:
- EP-A- 0 639 328
- EP-A- 0 985 343
- US-A- 6 039 278

## Description

### BACKGROUND OF THE INVENTION

### 1. Field of the Invention

The present invention relates to a spinning reel having an instant switching apparatus for a spool braking force which is installed in a fishing rod and is capable of winding a fishing line for catching a fish, and in particular to a spinning reel having an instant switching apparatus for a spool braking force which is capable of catching a fish without a cutting of a fishing line by quickly operating a set resistance by a drag mechanism based on an operation of a handle in a state that a fish is caught by a fishing hook. A similar spinning reel according to the preamble of claim 1 is already disclosed by US-A-6039278.

### 2. Description of the Background Art

Generally, a conventional spinning reel for a fishing gear includes a spool shaft which is freely moved in a front and rear direction in a reel body and is not rotated, a spool installed in a front end portion of the spool shaft and moved in a front and rear direction and on which a fishing line is wound, a drag mechanism installed between the spool shaft and the reel body for providing a certain resistance with respect to the rotation of the spool, a driving gear rotated by a handle rotated by a user, a helical gear engaged with the driving gear and rotated with the driving gear, a rotor connected with a front end of the helical gear and rotated along the circumference of the spool, and a reverse rotation prevention lever by which the rotor is rotated in the normal direction(the fishing line is wound) or the reverse rotation.

In the conventional spinning reel, a fishing hook connected at a front end of the fishing line is thrown into the sea or lake. When a fish is caught by a bait of the fishing hook, the user rotates the handle installed in one side of the reel body. In this state, the driving gear cooperated with the handle drives the helical gear and the rotor connected with the helical gear for thereby winding a fishing line on the spool. As the fishing line is wound in the spool, the fish caught by the fishing hook is drawn to the land.

However, in the case that a fish is big, the force tugged by the fish and the force for winding based on the rotation of the rotor is reverse. In this case, the fishing line may be cut. In order to prevent the above problems, an angler operates the reverse rotation prevention lever, so that only the rotor rotates in the normal direction for thereby preventing an unwinding of the fishing line, and a certain resistance force is generated with respect to the rotation of the spool set by the drag mechanism. Therefore, the resistance force of the drag mechanism and the force tugged by the fish are continuously offset, so that the fish loses strength, and the fishing line has a certain tension force by which the fishing line is not cut, and the fish loses the strength more, and then the fish is finally caught.

However, in the case of the common fishing, since the rotation resistance of the spool by the drag mechanism is not set based on the size of the fish, namely, a certain rotation resistance is set in the spool, when a fish eats the bait of the fishing hook, a withdrawing resistance is applied to the fishing line through the drag mechanism. Even when the fish pulls the bait, a certain resistance is generated with respect to the unwinding of the fishing line based on the drag mechanism, so that the fish throws up the bait and runs away.

In order to overcome the above problems, in the conventional spinning reel, a spool braking force switching control apparatus is installed. Therefore, the handle is quickly operated when the fish is caught by the fishing hook and then the rotation of the spool shaft is controlled. In addition, while the fishing line is being wound, when the braking position of the braking mechanism with respect to the spool shaft is switched to the releasing position, the operation lever of the operation mechanism installed in the rear end of the reel body is operated in the same manner. Therefore, at the time when a fish is caught by the fishing hook, in a state that an angler holds the fishing rod using one hand, and then the handle or operation lever must be quickly operated using the other hand. It is very hard to perform the above operation. Therefore, in the conventional art, an angling efficiency is significantly decreased.

### SUMMARY OF THE INVENTION

Accordingly, it is an object of the present invention to provide a spinning reel having an instant switching apparatus for a spool braking force which is capable of overcoming the problems encountered in the conventional art and is capable of switching a spool braking force based on the rotation of the driving gear when a user rotates the handle and is capable of implementing a free rotation state of the spool so that a fish caught by a fishing hook tugs the fishing line by a certain distance.

In order to achieve the above objects, there is provided a spinning reel having an instant switching apparatus for a spool braking force which includes a switching lever which includes an intermediate portion passing the reel body and being hinged, a kicking lever having a hinged intermediate portion in such a manner that an end portion of the kicking lever is engaged with an end portion of the switching lever positioned in the interior of the reel body, more than one returning lever which is installed in the driving gear and is rotated based on the rotation of the driving gear and hits the other end of the kicking lever positioned in the rotation range and is supported by the driving gear by an elastic member, a metal extended from a rear end of the spool shaft and having a side cutting portion formed in a circumference of the same, a clutch engaged and disengaged from the side cutting portion of the metal, and a clutch link connected with an end portion of the switching lever for transferring the clutch in an upward and downward direction based on the rotation of the switching lever, wherein in a state that the other end of the kicking lever is in a rotation range of the returning lever, the returning lever hits the other end of the kicking lever, and the kicking lever is rotated, and the switching lever and the clutch link are rotated, and the clutch is engaged with the side cutting portion of the metal based on the rotation of the clutch link in the spinning reel which includes a reel body, a driving gear installed in the interior of the reel body for implementing a driving operation based on the rotation of a handle, a helical gear engaged and rotated with the driving gear, a rotor engaged with a front end of the helical gear and rotated, a spool on which a fishing line is wound or unwound, and a spool shaft having a front end connected with the spool.

Two symmetrical circular column shaped protrusions are formed in a surface opposite to one surface of the driving gear engaged with the helical gear, and a returning lever is installed in each of two protrusions.

The retuming lever is formed in a L-shape and includes an elongated hole formed in a bent portion, and the protrusion is inserted into the elongated hole, and an inner side of the bent portion of the returning lever and the driving gear are connected with a spring which is an elastic member, so that an end portion of the returning lever contacts with an outer surface of the rotary shaft of the driving gear by an elastic recovering force of the spring.

An end portion of the switching lever positioned in the interior of the reel body is divided into two parts, and a torsion spring is installed in a lateral surface of the switching lever for thereby providing an elastic recovering force with respect to the rotation of the switching lever.

The kicking lever is formed in a L-shape in which the bent portion is hinged and includes an end portion inserted between the divided portions of the switching lever, and the other end positioned in the rotation range of the returning lever, and the kicking lever is rotated by the rotation of the switching lever and the hit of the retuming lever.

The clutch link is formed in a L-shape in which an intermediate portion is hinged and includes an end portion connected with an end portion of the switching lever by a tension spring and the other end portion connected with the clutch, so that the clutch is moved in the upward and downward directions in a vertical direction with respect to the length of the metal by an elastic recovering force of the tension spring based on the rotation of the switching lever for thereby engaging and disengaging the clutch to/from the side cutting portion of the metal.

### BRIEF DESCRIPTION OF THE DRAWINGS

The present invention will become better understood with reference to the accompanying drawings which are given only by way of illustration and thus are not limitative of the present invention, wherein;
Figure 1 is a partial cross-sectional view illustrating a spinning reel having an instant switching apparatus for a spool braking force according to the present invention;
Figure 2 is a front cross-sectional view illustrating a spinning reel of Figure 1;
Figure 3A is a concept view illustrating an operation relationship among a switching lever, a kicking lever and a returning lever based on a normal rotation of a driving gear of Figure 2;
Figure 3B is a concept view illustrating an operation relationship between a kicking lever and a returning lever based on a reverse rotation of a driving gear of Figure 2;
Figure 4 is a concept view illustrating an operation relationship between a clutch link and a clutch based on a rotation of a switching valve of Figure 2;
Figure 5 is a concept view illustrating an engagement and disengagement of a clutch and a metal of Figure 4; and
Figure 6 is a plan cross-sectional view illustrating a spinning reel of Figure 2.

### DETAILED DESCRIPTION OF THE PREFERRED EMBODIMENTS

The spinning reel having a spool braking force instant switching apparatus according to the present invention will be explained with reference to the accompanying drawings.

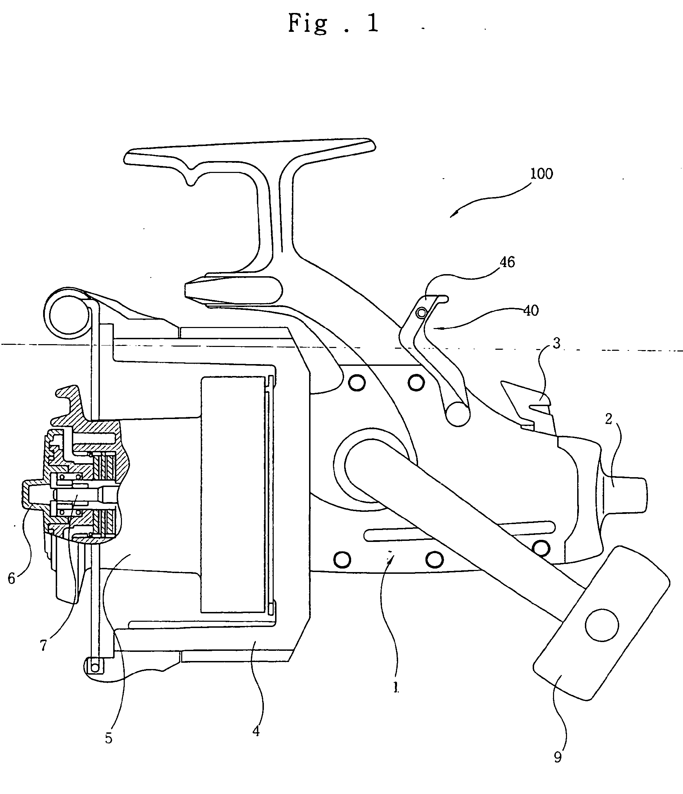

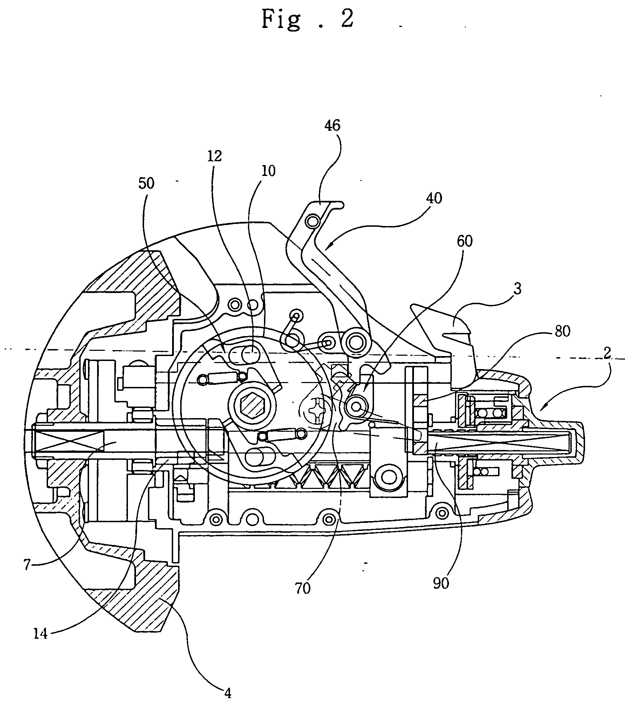

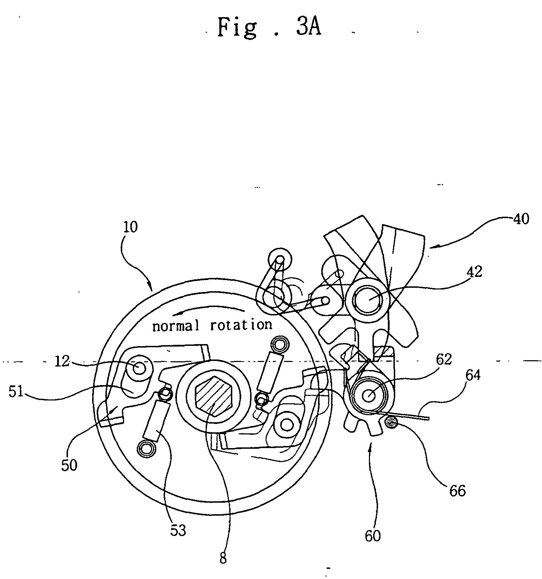

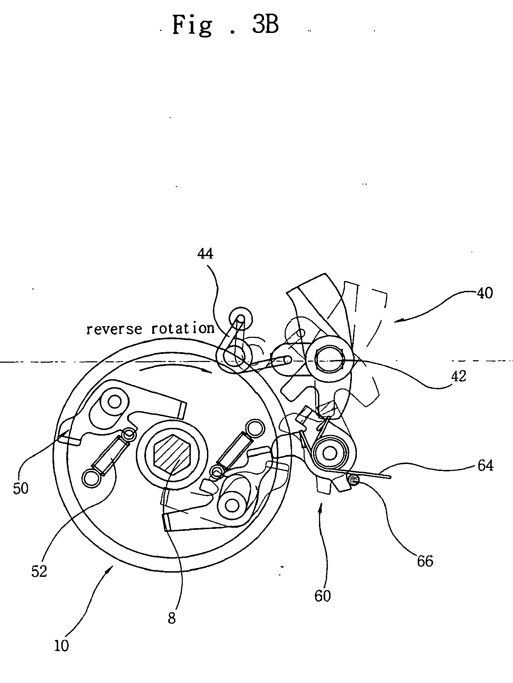

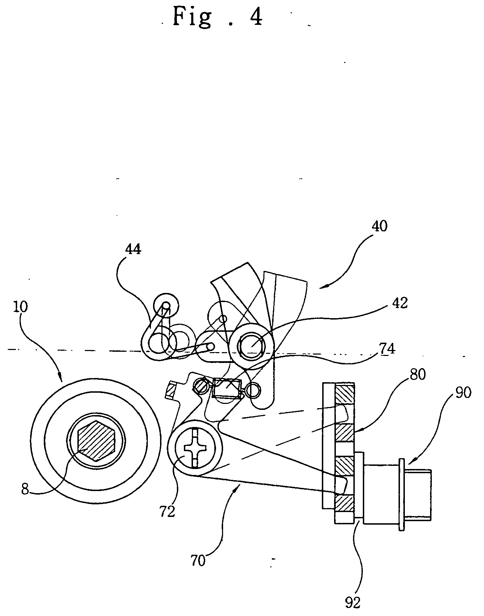

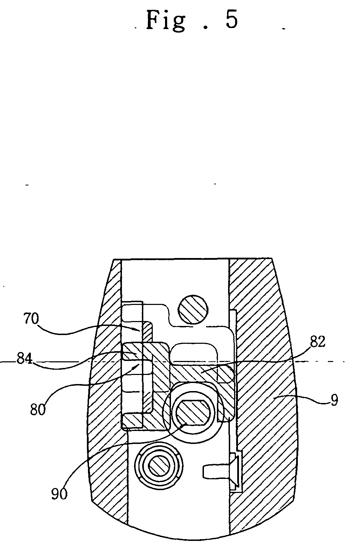

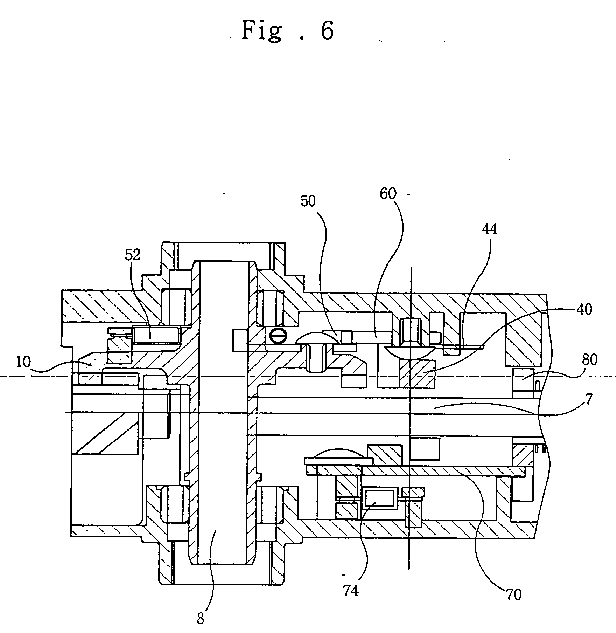

Figure 1 is a partial cross-sectional view illustrating a spinning reel having an instant switching apparatus for a spool braking force according to the present invention, Figure 2 is a front cross-sectional view illustrating a spinning reel of Figure 1, Figure 3A is a concept view illustrating an operation relationship among a switching lever, a kicking lever and a returning lever based on a normal rotation of a driving gear of Figure 2, Figure 3B is a concept view illustrating an operation relationship between a kicking lever and a returning lever based on a reverse rotation of a driving gear of Figure 2, Figure 4 is a concept view illustrating an operation relationship between a clutch link and a clutch based on a rotation of a switching valve of Figure 2, Figure 5 is a concept view illustrating an engagement and disengagement of a clutch and a metal of Figure 4, and Figure 6 is a plan cross-sectional view illustrating a spinning reel of Figure 2.

As shown in Figures 1, 2 and 6, the spinning reel according to the present invention includes a spool shaft 7, a spool 5, a front drag 6 installed between the spool 5 and the spool shaft 7, a fine drag 2 installed between the spool shaft 7 and the reel body 1, a driving gear 10 rotated based on the operation of the handle 9 by a user, a helical gear 14 engaged with the driving gear 10 and rotated with the same, a rotor 4 connected with a front end of the helical gear 14 and rotated along the circumference of the spool 5, a reverse rotation prevention lever 3 for controlling the rotation direction of the rotor 4, a switching lever 40 for switching the braking force of the spool 5, a plurality of returning lever 50 formed in the driving gear 10, a kicking lever 60 rotated by the switching lever 40 and the returning lever 50, a metal 90 extended from the rear end of the spool shaft 7 and having a side cutting portion 92 cut in parallel in a circumference, a clutch 80 engaged or disengaged with respect to the side cutting portion 92 of the metal 90, and a clutch link 70 connected with the switching lever 40 and the clutch 80 for engaging or disengaging the clutch 80 to the metal based on the operation of the switching lever 40.

Here, since the constructions and operations of the spool shaft 7, the spool 5, the front drag 6, the fine drag 2, the driving gear 10, the helical gear 14, the rotor 4 and the reverse rotation prevention lever 3 are same or similar with the construction and operation of the conventional spinning, the descriptions thereof will be omitted. The construction and operation of the spool braking force switching apparatus according to the present invention will be explained with reference to the accompanying drawings.

Two circular column shaped protrusions 12 are formed in one surface of the driving gear 10 which is opposite to the surface in which the driving gear 10 and the helical gear 14 are engaged. The returning lever 50 is engaged to the protrusion 12. An elongated hole 51 is formed in the returning lever 50. The protrusion 12 is inserted into the elongated hole 51, so that the returning lever 50 is moved and rotated by the length of the elongated hole 51. As shown in Figures 3A and 3B, an elongated hole 51 which operates as a L-shaped lever is formed in the bent portion, and a returning spring 53 having a stable state is installed in the inner side of the bent portion. The driving gear 10 is connected with the other end of the returning spring 53. In addition, one end of the returning lever 50 contacts with a circumference of the handle shaft 8 which is the center of the driving gear 10 based on an elastic force recovering force of the returning spring 53. Therefore, when a certain force is applied to the other end of the returning lever 50, the returning lever 50 is rotated with respect to the protrusion 12. When the applied force is removed, the returning lever 50 is positioned at a portion in which the returning lever 50 has the most stable energy by the elastic recovering force of the returning spring 52. When an external force is not applied to the returning lever 50, the returning lever 50 is positioned in a certain portion. Two returning lever 50 are symmetrically installed in the driving gear 10.

In addition, the handle 46 of the switching lever 40 is exposed to the outside of the reel body 1, and the other end of the switching lever 40 is positioned in the interior of the reel body 1, and the intermediate portion is engaged by the hinge 42. The other end is rotated in the reverse direction with respect to the rotation direction of the handle 46. Here, a state that the handle 46 of the switching leer 40 is moved in the front direction is referred to as the on-state, and a state that the same is moved in the rear direction is referred to as the off-state.

The other end of the switching lever 40 is formed in a Y-shaped, and the hinge 42 is installed at a crossing portion of the above Y-shaped portion. In addition, a torsion spring 44 is installed in the lateral side of the crossing portion and provides an elastic force for thereby implementing an on and off switching of the switching lever 40.

The kicking lever 60 contacts with the other ends of the returning lever 50 and the switching lever 40 installed in the driving gear 10 and rotates by the force applied by the returning lever 50 and is rotated based on the on/off state switching of the switching lever 40. The kicking lever 60 is formed in a L-shape, and the hinge 62 is installed in the bent portion, and one end of the kicking lever 60 is inserted into the divided other ends of the switching lever 40, and the other end of the kicking lever 60 is positioned in the direction in which the driving gear 10 is positioned. Therefore, when the handle 46 of the switching lever 40 is rotated and becomes the on state, one end of the kicking lever 60 is rotated in the rear direction of the reel body 1, and the other end of the kicking lever 60 is escaped beyond the range in which contacting with the other end of the returning lever 50. On the contrary, when the handle 46 of the switching lever 40 is rotated and becomes the off state, an end of the kicking lever 60 is rotated in the front direction of the reel body 1, and the other end of the kicking lever 60 is moved to a portion in a range in which the other end of the same contacts with the other end of the returning lever 50 which is rotated along the driving gear 10.

In a state that the handle of the switching lever 40 is in the off state, when a user rotates the handle 9, the driving gear 10 is rotated, and the other end of the returning lever 50 hits the other end of the kicking lever 60. Therefore, the kicking lever 60 rotates the other end of the switching lever 40, and the switching lever 40 is switched to the on state.

As shown in figures 3A and 3B, a torsion spring 64 is installed in the kicking lever 60. A boss 66 is installed in an outer portion of the bent portion of the kicking lever 60 for thereby generating an elastic force from the torsion spring 64, and an end portion of the torsion spring 64 is placed on the boss 66.

Figure 3A is a view illustrating an operation relationship among the returning lever 50, the kicking lever 60 and the switching lever 40 when the driving gear 10 is rotated in the normal direction. The other end of the returning lever 50 contacts with the other end of the kicking lever 60, and the kicking lever is rotated. As shown in Figure 3B, in the case that the driving gear 10 is reverse-rotated, the returning lever 50 does not rotates the kicking lever 60. Namely, the returning lever 50 itself rotates based on the protrusion 12 and moves beyond the other end of the kicking lever 60. The surface opposite to the surface in which the other end of the kicking lever 60 contacts with the other end of the returning lever 50 is rounded, so that the returning lever 50 moves beyond the kicking lever 60.

As shown in Figures 4 and 5, in the construction of the spinning reel, the spool shaft 7 is positioned below the driving gear 10. The metal 90 is extended from the rear end of the spool shaft 7. A side cutting portion 92 is formed in an outer surface of the metal 90. A clutch 80 is engaged with the side cutting portion 92 for thereby suppressing the rotation and forward and rearward direction movement of the spool shaft 7, and the clutch 80 is released from the side cutting portion 92, so that the spool shaft 7 is movable in the front and rear directions.

The above clutch 80 includes an engaging portion 82 which surrounds the side cutting portion 92 of the metal 90, and a link connection portion 84 into which an end of the clutch link 70 is inserted in such a manner that the clutch 80 is upwardly moved for thereby releasing the clutch 80 from the metal 90.

The clutch link 70 which connects the switching lever 40 and the clutch 80 is formed in a L-shape, and the bent portion is connected with the hinge 72. One end of the clutch link 70 is positioned in front of the other end of the switching lever 40, and the other ends of the clutch link 70 and the switching lever 40 are connected with the tension spring 74. One end of the clutch link 70 is applied with a force for thereby being rotated in the direction of the other end of the switching lever 40 by the tension spring 74. Therefore, in the case that the handle 46 of the switching lever 40 is in the off state, the other end of the switching lever 40 is rotated in a certain direction of the clutch link 70, namely, in the direction that the driving gear 10 is positioned. Therefore, the elastic recovering force of the tension spring 74 is decreased, and one end of the clutch link 70 is pushed in the direction of the driving gear 10. The other end of the clutch link 70 is rotated in the upward direction, and the clutch 80 connected with the other end of the clutch link 70 is upwardly moved and is escaped from the metal 90.

On the contrary, in the case that the handle 46 of the switching lever 40 is in the of state, the other end of the switching lever 40 is moved in the reverse direction of the driving gear 10, so that a larger elastic recovering force of the tension spring 74 is generated, and is rotated in the rear direction that one end of the clutch link 70 or the other end of the switching lever 40 is rotated, and the other end of the clutch link 70 is downwardly rotated. Therefore, the clutch 80 connected with the other end of the clutch link 70 is engaged with the side cutting portion 92 of the metal 90 and suppresses the rotation and the forward and rearward direction movement of the metal.

The operation of the spinning reel having the spool braking force instant switching apparatus will be explained.

A fishing hook with a bait is thrown into the sea or water, and the switching lever 40 becomes the off state so that the spool 5 becomes a free state. Thereafter, it waits for an eating of bait by a fish. In the above state, when a fish runs away with taking the bait, since the rotation of the spool 5 is free, the fish freely runs away with taking the bait.

In a state that the fish freely swims with taking the bait, the user controls the fine drag 2 installed in the rear side of the reel body 1 and gradually applies a resistance with respect to the rotation of the spool 5. At this time, in the case that the fish is big, the strength of the fish is gradually decreased by the resistance of the rotation of the spool, and the fish may be caught by the user. At this time, the user rotates the handle in the normal direction.

In the off state of the switching lever 40 before the handle 9 is rotated, the other end of the kicking lever 60 is positioned in the range for being contacted with the returning lever 50, and one end of the clutch link 70 is rotated in the direction of the driving gear 10, and the clutch 80 connected with the other end of the clutch link 70 is escaped from the side cutting portion 92 of the metal 90, and the rotation of the spool 5 is in the free state.

In a state that the user is in the position for catching the fish, when the user rotates the handle 9 in the normal direction, as shown in Figure 3A, the driving gear 10 is rotated based on the normal direction rotation of the handle 9. In the of state of the switching lever 40, the other end of the returning lever 50 which is rotated together with the driving gear 10 hits the other end of the kicking lever 60. The kicking lever 60 is rotated based on the above hit, and the handle of the switching lever 40 is moved in the on state position by the rotation of the kicking lever 60, and the other end of the switching lever 40 is rotated in the reverse direction of the driving gear 10.

One end of the clutch link 70 is rotated in the reverse direction of the driving gear 10 by the rotation of the other end of the switching lever 40, and the clutch 80 connected with the other end of the clutch link 70 is downwardly moved. The clutch 80 which is downwardly moved is engaged with the side cutting portion 92 of the metal 90 connected with the spool shaft 7 for thereby suppressing the rotation and forward and rearward direction movement of the spool shaft 7.

Therefore, a main drag force is applied to the spool 5, and the handle 9 is rotated in the normal direction based on the user's selection. The strength of the fish is decreased by the main drag, and the fishing line is continuously wound on the spool 5, so that the fish is caught by the user.

In the above description, the fine drag was controlled. In another embodiment, the spool braking force may be directly switched without controlling the fine drag for thereby catching the fish.

The user rotates the handle in the normal direction. In the case that the user rotates the handle in the reverse direction, the returning lever continuously moves beyond the kicking lever, so that the spool braking force is not switched for thereby implementing a continuous off state. Namely, in the case that when the user rotates the handle in the normal direction, the spool braking force is switched and maintains the on state.

As described above, the spinning reel having a spool braking force instant switching apparatus according to the present invention is capable of maintaining a free rotation state spool for thereby preventing a fish from drawing up a bait based on a tension force of the fishing line when the fish initially baits for thereby increasing a fish catching efficiency and easily providing a drag force in the above-described state.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. A spinning reel which includes a real body (1), a driving gear (10) installed in the interior of the real body (1) for implementing a driving operation based on the rotation of a handle (9), a helical gear (14) engaged and rotated with the driving gear (10), a rotor (4) engaged with a front end of the helical gear (14) and rotated, a spool (5) on which a fishing line is wound or unwound, and a spool shaft (7) having a front end connected with the spool (5), the spinning reel having a spool braking force instant switching apparatus, **characterized in that** the switching apparatus comprises:
a switching lever (40) which includes an intermediate portion passing the reel body (1) and being hinged;
a kicking lever (60) having a hinged intermediate portion in such a manner that an end portion of the kicking lever is engaged with an end portion of the switching lever (40) positioned in the interior of the reel body (1);
more than one returning lever (50) which is installed in the driving gear (10) and is rotated based on the rotation of the driving gear (10) and hits the other end of the kicking lever (60) positioned in the rotation range and is supported by the driving gear (10) by an elastic member (55);
a metal (90) extended from a rear end of the spool shaft (7) and having a side cutting portion (92) formed in a circumference of the same;
a clutch (80) engaged and disengaged from the side cutting portion (92) of the metal (90); and
a clutch link (70) connected with an end portion of the switching lever (40) for transferring the clutch (80) in an upward and downward direction based on the rotation of the switching lever(40),
wherein in a state that the other end of the kicking lever (60) is in a rotation range of the returning lever (50), the returning lever (50) hits the other end of the kicking lever (60), and the kicking lever (60) is rotated, and the switching lever (40) and the clutch link (70) are rotated, and the clutch (80) is engaged with the side cutting portion (92) of the metal (90) based on the rotation of the dutch link (70).

2. The spinning reel of claim 1, wherein two symmetrical circular column shaped protrusions are formed in a surface opposite to one surface of the driving gear engaged with the helical gear, and a returning lever is installed in each of two protrusions.

3. The spinning reel of claim 2, wherein said returning lever is formed in a L-shape and includes an elongated hole formed in a bent portion, and the protrusion is inserted into the elongated hole, and an inner side of the bent portion of the returning lever and the driving gear are connected with a spring which is an elastic member, so that an end portion of the returning lever contacts with an outer surface of the rotary shaft of the driving gear by an elastic recovering force of the spring.

4. The spinning reel of claim 1, wherein an end portion of the switching lever positioned in the interior of the reel body is divided into two parts, and a torsion spring is installed in a lateral surface of the switching lever for thereby providing an elastic recovering force with respect to the rotation of the switching lever.

5. The spinning reel of claim 1, wherein said kicking lever is formed in a L-shape in which the bent portion is hinged and includes an end portion inserted between the divided portions of the switching lever, and the other end positioned in the rotation range of the returning lever, and the kicking lever is rotated by the rotation of the switching lever and the hit of the returning lever.

6. The spinning reel of claim 1, wherein said clutch link is formed in a L-shape in which an intermediate portion is hinged and includes an end portion connected with an end portion of the switching lever by a tension spring and the other end portion connected with the clutch, so that the clutch is moved in the upward and downward directions in a vertical direction with respect to the length of the metal by an elastic recovering force of the tension spring based on the rotation of the switching lever for thereby engaging and disengaging the clutch to/from the side cutting portion of the metal.

## Patentansprüche

1. Eine Angelrolle umfassend einen Rollenkörper (1), ein Antriebsgetriebe (10), das im Innern des Rollenkörpers (1) installiert ist, um mittels der Drehbewegung einer Kurbel einen Antrieb zu realisieren, ein Schrägstirnrad (14), das mit dem Antriebsgetriebe (10) im Wirkeingriff steht und mit diesem rotiert, ein Rotor (4), der mit dem vorderen Ende des Schrägstirnrads (14) im Wirkeingriff steht und mit diesem rotiert, eine Spule (5), auf der eine Angelleine auf- und abgewickelt wird, und ein Spulenschaft (7), der ein vorderes Ende aufweist, das mit der Spule (5) verbunden ist, die Angelrolle weist eine Umschaltvorrichtung zum sofortigen Umschalten der Spulenbremskraft auf, **dadurch gekennzeichnet, dass** die Umschaltvorrichtung folgendes umfasst:
einen Umschalthebel (40), der über den Rollenkörper (1) hinausragt und über einen Zwischenbereich an diesem drehbar angelagert ist;
einen Stoßhebel (60) mit einem solchermaßen drehbar ausgebildeten Zwischenbereich, dass ein Endbereich des Stoßhebels im Wirkeingriff mit einem Endbereich des Umschalthebels (40) steht, der im Inneren des Rollenkörpers (1) positioniert ist;
mehr als ein Rückholhebel (50), der im Antriebsgetriebe (10) installiert ist und bei einer Drehbewegung des Antriebsgetriebes (10) mitrotiert und
dabei an das andere Ende des Stoßhebels (60) anschlägt, das sich im Rotationsbereich befindet und vom Antriebsgetriebe mittels eines elastischen Elements (55) getragen wird;
ein Metall (90), das sich vom rückwärtigen Ende des Spulenschafts (7) erstreckt und das einen seitlich eingeschnittenen Bereich (92) umfasst, der an dessen Außenumfang ausgebildet ist;
eine Kupplung mit schaltbarem Wirkeingriff zum seitlich eingeschnittenen Bereich (92) des Metalls (90) und
ein Kupplungsanschluss (70), der mit einem Endbereich des Umschalthebels (40) verbunden ist, um die Kupplung (80) in Abhängigkeit der Drehbewegung des Umschalthebels in aufwärtiger oder abwärtiger Richtung zu verschieben;
im Zustand, bei dem das andere Ende des Stoßhebels (60) sich im Rotationsbereich des Rückholhebels befindet, schlägt der Rückholhebel gegen das andere Ende des Stoßhebels (60) und der Stoßhebel (60) und
der Umschalthebel (40) und der Kupplungsanschluss (70) führen eine Drehbewegung aus und die Kupplung (80) tritt in Wirkverbindung mit dem seitlich eingeschnittenen Bereich (92) des Metalls (90) in Abhängigkeit der Drehbewegung des Kupplungsanschlusses (70).

2. Angelrolle nach Anspruch 1, wobei zwei symmetrische Vorsprünge mit kreisförmiger zylindrischer Form in einer Wandung ausgebildet werden, die einer Wandung des Antriebsgetriebes, das mit dem Schrägstirnrad in Wirkverbindung steht, gegenüber liegt, ausgebildet sind und ein Rückholhebel auf jedem der beiden Vorsprünge befestigt ist.

3. Angelrolle nach Anspruch 2, wobei der Rückholhebel L-förmig ausgebildet ist und ein Langloch im Winkelbereich umfasst, wobei der Vorsprung in das Langloch eingeführt ist und die Innenseite des Winkelbereichs des Rückholhebels über eine Feder, die ein elastisches Element darstellt, mit dem Antriebsgetriebe verbunden ist, so dass ein Endbereich des Rückholhebels durch die elastische Rückstellkraft der Feder mit einer äußeren Fläche der Drehachse des Antriebsgetriebes in Kontakt steht.

4. Angelrolle nach Anspruch 1, wobei ein Endbereich des Umschalthebels, der sich im Inneren des Rollenkörpers befindet, in zwei Teile aufgeteilt ist und eine Torsionsfeder in einer lateralen Fläche des Umschalthebels installiert ist, um eine elastische Rückstellkraft gegen eine Rotationsbewegung des Umschalthebels aufzubringen.

5. Angelrolle nach Anspruch 1, wobei der Stoßhebel in L-Form ausgebildet ist, dessen Winkelbereich drehbar gelagert ist, und einen Endbereich aufweist, der zwischen dem aufgespaltenen Bereich des Umschalthebels eingeführt ist sowie ein anderes Ende, das sich im Rotationsbereich des Rückholhebels befindet und der Stoßhebel, der durch die Rotation des Umschalthebels gedreht wird, gegen den Rückholhebel schlägt.

6. Angelrolle nach Anspruch 1, wobei der Kupplungsanschluss in L-Form ausgebildet ist, dessen Mittelbereich drehbar gelagert ist, und einen Endbereich aufweist, der mit einem Endbereich des Umschalthebels über eine Spannfeder verbunden ist, und einen anderen Endbereich, der mit der Kupplung verbunden ist, so dass die Kupplung aufwärts und abwärts in senkrechter Richtung im Verhältnis zur Längsrichtung des Metalls durch die elastische Rückstellekraft der Spannfeder in Abhängigkeit der Drehbewegung des Umschalthebels bewegt wird und so die Kupplung zum seitlich eingeschnittenen Bereich des Metalls aus- und eingerückt wird.

## Revendications

1. Moulinet de pêche comprenant un corps de moulinet (1), un engrenage menant (10) installé à l'intérieur du corps de moulinet (1) pour la mise en oeuvre d'une opération d'entrainement selon le sens de rotation d'une poignée (9), un engrenage hélicoïdal (14) engagé et tournant avec l'engrenage menant (10), un rotor (4) engagé avec une extrémité avant de l'engrenage hélicoïdal (14) et tournant, un tambour (5) sur lequel une ligne est enroulée ou déroulée, et un arbre de tambour (7) ayant une extrémité avant reliée au tambour (5), le moulinet de pêche ayant un appareil de commutation instantané de force de freinage de tambour,
**caractérise en ce que**
l'appareil de commutation comprend :
- un levier de commutation (40) ayant une partie intermédiaire traversant le corps de moulinet (1) et articulée ;
- un levier de lancement (60) ayant une partie intermédiaire articulée d'une manière telle qu'une partie d'extrémité du levier de lancement est engagée avec une partie d'extrémité du levier de commutation (40) positionnée à l'intérieur du corps de moulinet (1) ;
- plus d'un levier de retour (50) installé dans l'engrenage menant (10) et tournant dans le sens de rotation de l'engrenage menant (10), qui frappe l'autre extrémité du levier de lancement (60) positionné dans la plage de rotation en étant supporté par l'engrenage menant (10) par un élément élastique (55) ;
- un métal (90) étendu depuis une extrémité arrière de l'arbre de tambour (7) et ayant une partie de découpe latérale (92) formée dans une circonférence de celui-ci ;
- un embrayage (80) engagé et désengage de la partie de découpe latérale (92) du métal (90) ;
- et
- une commande d'embrayage (70) connectée à une partie d'extrémité du levier de commutation (40) pour transférer l'embrayage (80) dans une direction vers le haut et vers le bas selon le sens de rotation du levier de commutation (40),
dans lequel, dans un état selon lequel l'autre extrémité du levier de lancement (60) est dans la plage de rotation du levier de retour (50), le levier de retour (50) frappe l'autre extrémité du levier de lancement (60) et le levier de lancement (60) est tourné, et le levier de commutation (40) et la commande d'embrayage (70) sont tournés, et l'embrayage (80) est engagé avec la partie de découpe latérale (92) du métal (90) dans le sens de rotation de la commande d'embrayage (70).

2. Moulinet de pêche selon la revendication 1,
dans lequel deux saillies en forme de colonne circulaire symétrique sont formées dans une surface opposée à une surface de l'engrenage menant engagé avec l'engrenage hélicoïdal, et un levier de retour est installé dans chacune des deux saillies.

3. Moulinet de pêche selon la revendication 2,
dans lequel le levier de retour est en forme de L et comprend un orifice allongé formé dans une partie courbe, et la saillie est insérée dans l'orifice allongé, et un côté interne de la partie courbe du levier de retour et l'engrenage menant sont connectés avec un ressort qui est un élément élastique de sorte qu'une partie d'extrémité du levier de retour vient en contact avec une surface externe de l'arbre rotatif de l'engrenage menant par une force de récupération élastique du ressort.

4. Moulinet de pèche selon la revendication 1,
dans lequel une partie d'extrémité du levier de commutation positionné à l'intérieur du corps de moulinet est divisée en deux parties, et un ressort de torsion est installé dans une surface latérale du levier de commutation pour fournir de ce fait une force de récupération élastique par rapport à la rotation du levier de commutation.

5. Moulinet de pêche selon la revendication 1,
dans lequel le levier de lancement est en forme de L dont le coude est articulé et comprend une partie d'extrémité insérée entre les parties divisées du levier de commutation et l'autre extrémité positionnée dans la plage de rotation du levier de retour, et le levier de lancement est tourné par la rotation du levier de commutation et la frappe du levier de retour.

6. Moulinet de pêche selon la revendication 1,
dans lequel la commande d'embrayage est en forme de L dans laquelle une partie intermédiaire est articulée, et comprend une partie d'extrémité reliée à une partie d'extrémité du levier de commutation par un ressort de tension et l'autre partie d'extrémité reliée à l'embrayage de sorte que l'embrayage est déplacé dans les directions vers le haut et vers le bas dans une direction verticale par rapport à la longueur du métal, par une force de récupération élastique du ressort de tension dans le sens de rotation du levier de commutation pour engager et désengager de ce fait l'embrayage sur/de la partie de découpe latérale du métal.
